(19) Europäisches Patentamt
European Patent Office
Office européen des brevets

(11) Veröffentlichungsnummer: **0 168 709**
**A1**

(12) **EUROPÄISCHE PATENTANMELDUNG**

(21) Anmeldenummer: **85108140.6**

(22) Anmeldetag: **01.07.85**

(51) Int. Cl.⁴: **C 07 F 9/40**

(30) Priorität: **12.07.84 DE 3425701**

(43) Veröffentlichungstag der Anmeldung: **22.01.86**
**Patentblatt 86/4**

(84) Benannte Vertragsstaaten: **CH DE FR GB IT LI**

(71) Anmelder: **BAYER AG, Konzernverwaltung RP**
**Patentabteilung, D-5090 Leverkusen 1 Bayerwerk (DE)**

(72) Erfinder: **Maurer, Fritz, Dr., Roeberstrasse 8,**
**D-5600 Wuppertal 1 (DE)**

(54) **Verfahren zur Herstellung von chlorierten Phosphoryl-methylcarbonyl-Derivaten und neue Zwischenprodukte zu ihrer Herstellung.**

(57) Die herbizid wirksamen chlorierten Phosphorylmethylcarbonyl-Derivate der Formel (I)

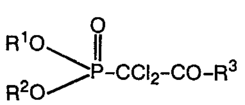

(I)

in welcher
$R^1$ und $R^2$ gleich oder verschieden sind und für Alkyl oder Aryl stehen und
$R^3$ für gegebenenfalls substituierte Reste aus der Reihe Alkyl und Cycloalkyl steht,
erhält man auf technisch einfache Weise in guten Ausbeuten und hoher Reinheit, indem man Phosphoryl-methylcarbonyl-Verbindungen der Formel (II)

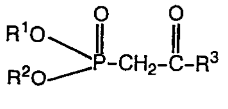

(II)

in Gegenwart eines Alkalisalzes einer niederen Carbonsäure oder eines Alkalihydrogencarbonats als Säureakzeptor und in Gegenwart von Wasser als Verdünnungsmittel bei Temperaturen zwischen 0°C und 35°C durch Umsetzung mit elementarem Chlor chloriert.

0168709



BAYER AKTIENGESELLSCHAFT 5090 Leverkusen, Bayerwerk
Konzernverwaltung RP
Patentabteilung
Bi/by-c
IVa

1. JULI 1984

Verfahren zur Herstellung von chlorierten Phosphorylmethylcarbonyl-Derivaten und neue Zwischenprodukte zu ihrer Herstellung

Die vorliegende Erfindung betrifft ein neues Verfahren zur Herstellung von herbizid wirksamen, chlorierten Phosphorylmethylcarbonyl-Derivaten sowie neue Zwischenprodukte zu ihrer Herstellung.

Es ist bekannt, chlorierte Phosphorylmethylcarbonyl-Derivate zu erzeugen, indem man Dichlormethanphosphorsäure-Derivate mit Carbonsäurehalogeniden in Gegenwart von starken Basen umsetzt. Nachteilig bei diesem Verfahren sind die niedrigen Reaktionstemperaturen, der dafür notwendige hohe Energieaufwand, die Durchführung der Reaktion im stark basischen Milieu, die dadurch bedingten Nebenreaktionen, die unbefriedigende Ausbeute und Reinheit (vgl. Synthesis 1978, 29 ff).

Es wurde nun gefunden, daß man chlorierte Phosphorylmethylcarbonyl-Derivate der Formel (I)

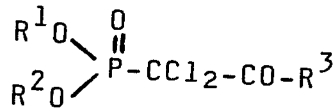 (I)

in welcher

$R^1$ und $R^2$ gleich oder verschieden sind und für Alkyl oder Aryl stehen und

$R^3$ für gegebenenfalls substituierte Reste aus der Reihe Alkyl und Cycloalkyl steht,

auf technisch einfache Weise in hohen Ausbeuten und hoher Reinheit erhält, wenn man Phosphorylmethylcarbonyl-Verbindungen der Formel (II)

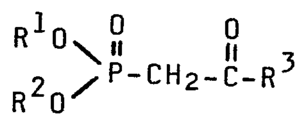 (II)

in welcher

$R^1$, $R^2$ und $R^3$ die oben angegebenen Bedeutungen haben,

in Gegenwart eines Alkalisalzes einer niederen Carbonsäure oder eines Alkalihydrogencarbonates als Säureakzeptor und in Gegenwart von Wasser als Verdünnungsmittel bei Temperaturen zwischen 0°C und 35°C durch Umsetzung mit elementarem Chlor chloriert.

Überraschenderweise gelingt es mit Hilfe des erfindungsgemäßen Verfahrens, die gewünschte geminale Chlorierung der Phosphorylmethylcarbonyl-Verbindungen in 1,1-Position in sehr guter Ausbeute und Reinheit durchzuführen, ohne daß eine Chlorierung an anderen Stellen des Moleküls stattfindet. Dies ist umso überraschender, als nach dem Stand der Technik die Bildung von Nebenprodukten in beträchtlichem Ausmaß hätte erwartet werden müssen.

Bevorzugt werden mit dem erfindungsgemäßen Verfahren folgende Verbindungen der Formel (I) hergestellt, in welcher

$R^1$ und $R^2$ gleich oder verschieden sind und für Alkyl mit 1 bis 6 Kohlenstoffatomen oder für Phenyl stehen und

$R^3$ für gegebenenfalls einfach oder mehrfach durch Halogen (wie insbesondere Fluor, Chlor und/oder Brom), $C_1$-$C_4$-Alkoxy und/oder $C_3$-$C_6$-Cycloalkyl substituiertes Alkyl mit bis zu 8 Kohlenstoffatomen oder für gegebenenfalls einfach oder mehrfach durch $C_1$-$C_3$-Alkyl substituiertes Cycloalkyl mit 3 bis 6 Kohlenstoffatomen steht.

Die Erfindung betrifft insbesondere die Herstellung von Verbindungen der Formel (I), in welcher

$R^1$ und $R^2$ gleich oder verschieden sind und für Methyl, Ethyl, n-Propyl, i-Propyl, n-Butyl, i-Butyl, sec.-Butyl oder tert.-Butyl stehen und

$R^3$ für Methyl, Ethyl, n-Propyl, i-Propyl, n-Butyl, i-Butyl, sec.-Butyl, tert.-Butyl, Cyclopropyl, Cyclohexyl, 2,2-Dimethylpropyl, 2-Methylbutyl, 2-Ethylbutyl, Cyclopropylmethyl oder Cyclohexylmethyl steht.

Verwendet man beispielsweise O,O-Di-i-butyl-(4-methyl-2-oxo-pentan)-phosphonsäureester und Chlor als Ausgangsstoffe, so kann der Reaktionsablauf nach dem erfindungsgemäßen Verfahren durch folgendes Formelschema wiedergegeben werden:

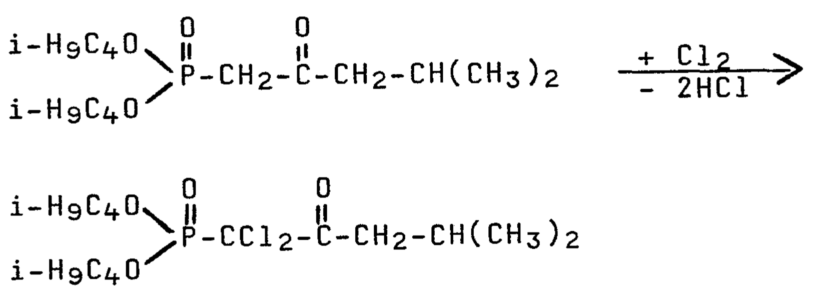


Die als Ausgangsstoffe für das Verfahren zu verwendenden Phosphorylmethylcarbonyl-Verbindungen sind durch die Formel (II) definiert. In dieser Formel stehen $R^1$, $R^2$ und $R^3$ vorzugsweise bzw. insbesondere bevorzugt für diejenigen Reste, welche bereits im Rahmen der Substituentendefinition der Formel (I) vorzugsweise bzw. als insbesondere bevorzugt genannt sind.

Als Beispiele für die Verbindungen der Formel (II) seien genannt:

Tabelle 1

| $R^1$ | $R^2$ | $R^3$ |
|---|---|---|
| $-C_3H_7-i$ | $-C_3H_7-i$ | $-C_3H_7-i$ |
| $-C_3H_7-i$ | $-C_3H_7-i$ | 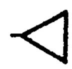 |
| $-C_4H_9-i$ | $-C_4H_9-i$ | $-CH_2-CH(CH_3)_2$ |
| $-C_4H_9-sec.$ | $-C_4H_9-sec.$ | $-CH_2-CH(CH_3)_2$ |
| $-C_3H_7-i$ | $-C_3H_7-i$ | $-CH_2-C(CH_3)_3$ |
| $-C_3H_7-i$ | $-C_3H_7-i$ | $-CH_2-$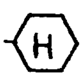 |
| $-C_3H_7-n$ | $-C_3H_7-n$ | $-CH_2-CH(CH_3)_2$ |
| $-C_3H_7-i$ | $-C_3H_7-i$ | $-C_3H_7-n$ |
| $-C_3H_7-n$ | $-C_3H_7-n$ | $-CH(CH_3)_2$ |
| $-C_3H_7-n$ | $-C_3H_7-n$ | $-C_3H_7-n$ |
| $-C_3H_7-i$ | $-C_3H_7-i$ | $CH_3$<br>$-CH_2-CH-CH_2-CH_3$ |
| $-C_3H_7-i$ | $-C_3H_7-i$ | $CH_2-CH_3$<br>$-CH_2-CH-CH_2-CH_3$ |

Die Phosphorylmethylcarbonylverbindungen der Formel (II) sind zum Teil noch nicht in der Literatur beschrieben.

Neu sind beispielsweise die Verbindungen der Formel (IIa)

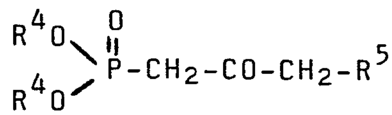

(IIa)

in welcher

$R^4$ für i-Propyl, i-Butyl oder sec.-Butyl steht und

$R^5$ für i-Propyl, tert.-Butyl oder Cyclohexyl steht.

Man erhält die Verbindungen der Formel (IIa), wenn man

a) Methanphosphonsäureester der Formel (III)

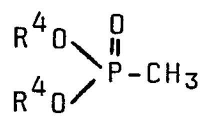

(III)

in welcher

$R^4$ die oben angegebene Bedeutung hat,

mit Carbonsäurehalogeniden der Formel (IV)

$$Hal-CO-CH_2-R^5 \qquad (IV)$$

in welcher

$R^5$ die oben angegebene Bedeutung hat und

Hal für Chlor oder Brom steht,

in Gegenwart von Säureakzeptoren, wie z.B. Butyllithium, in Gegenwart von Katalysatoren, wie z.B. Kupferiodid, und in Gegenwart von inerten Verdünnungsmitteln, wie z.B. Tetrahydrofuran, bei Temperaturen zwischen -70°C bis +50°C, in einer Schutzgasatmosphäre, wie z.B. Stickstoff oder Argon, umsetzt (vgl. dazu Tetrahedron 34, S. 649 ff (1978) und die Herstellungsbeispiele),

oder wenn man

b) Oxirane der Formel (V)

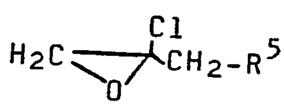

(V)

in welcher

$R^5$ die oben angegebene Bedeutung hat,

mit Phosphorigsäureestern der Formel (VI)

$$(R^4O)_3P \qquad \text{(VI)}$$

in welcher

$R^4$ die oben angegebene Bedeutung hat,

gegebenenfalls in Gegenwart von Verdünnungsmitteln, wie z.B. Methylenchlorid, bei Temperaturen zwischen 0°C und 40°C umsetzt (vgl. dazu Chem. Ber. 115, 601 (1982) und die Herstellungsbeispiele),

oder wenn man

c) Allenphosphonsäureester der Formel (VII)

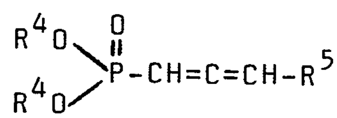

(VII)

in welcher

$R^4$ und $R^5$ die oben angegebenen Bedeutungen haben,

in Gegenwart von sekundären Aminen der Formel (VIII)

$$HNR^6R^7 \qquad \text{(VIII)}$$

in welcher

$R^6$ und $R^7$ gleich oder verschieden sind und für $C_1$-$C_4$-Alkyl stehen,

und gegebenenfalls in Gegenwart von Verdünnungsmitteln, wie z.B. Ether, bei Temperaturen zwischen

0°C und 30°C zu den entsprechenden Enaminen der Formeln (IXa)/(IXb)

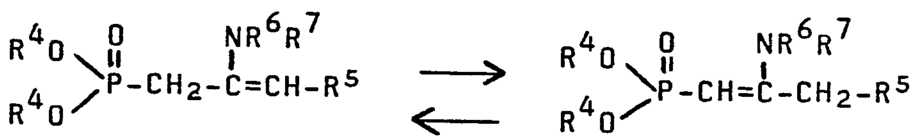

(IXa) (IXb)

in welchen

$R^4$, $R^5$, $R^6$ und $R^7$ die oben angegebenen Bedeutungen haben,

umsetzt und diese Verbindungen der Formeln (IXa)/(IXb) in Gegenwart von Säuren, wie z.B. Essigsäure, und Wasser, bei Temperaturen zwischen 15°C und 35°C hydratisiert (vgl. Tetrahedron Letters Vol. 22, 5175 ff. (1981) und die Herstellungsbeispiele).

Die Verbindungen der Formeln (III), (IV), (V), (VI) und (VIII) sind bekannt und/oder lassen sich nach bekannten Methoden herstellen.

Die Allenphosphonsäureester der Formel (VII) und die entsprechenden Enamine der Formeln (IXa)/(IXb) sind neu. Die Verbindungen der Formel (VII) lassen sich auf

einfache Weise herstellen, indem man Phosphorigsäureesterchloride der Formel (X)

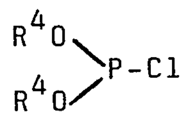

(X)

in welcher

$R^4$ die oben angegebene Bedeutung hat,

mit Propinolen der Formel (XI)

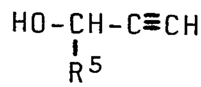

(XI)

in welcher

$R^5$ die oben angegebene Bedeutung hat,

in Gegenwart von Verdünnungsmitteln, wie z.B. Methylenchlorid, und in Gegenwart von Säureakzeptoren, wie z.B. Triethylamin, bei Temperaturen zwischen -10°C bis +50°C umsetzt (vgl. dazu Zh. Obs. Khim. 35, 1210 (1965) und die Herstellungsbeispiele), wobei sich die zunächst entstehenden Phosphorigsäure-propinylester in die Allenphosphonate (VIII) umlagern.

Die Verbindungen der Formeln (X) und (XI) sind bekannt und/oder können nach an sich bekannten Verfahren hergestellt werden.

Als Säureakzeptoren werden beim erfindungsgemäßen Verfahren zur Herstellung der Verbindungen der Formel (I) die Alkalisalze von niederen aliphatischen Carbonsäuren, insbesondere von solchen mit 1 bis 4 C-Atomen, wie z.B. Natrium- und Kaliumacetat, sowie Alkalihydrogencarbonate, wie z.B. Natrium- und Kaliumhydrogencarbonat, verwendet.

Die Reaktion wird im allgemeinen bei Temperaturen zwischen 0°C und 35°C, vorzugsweise zwischen 5°C und 20°C durchgeführt. Die Reaktion wird im allgemeinen bei Normaldruck durchgeführt.

Zur Durchführung des erfindungsgemäßen Verfahrens setzt man im allgemeinen auf 1 Mol der Verbindung der Formel (II) 2 Mol Chlor und zusätzlich 2 bis 3 Mol, vorzugsweise 2 bis 2,4 Mol, eines geeigneten Säureakzeptors ein.

Bevorzugt werden eine Verbindung der Formel (II), Säureakzeptor und Wasser vorgelegt und dann Chlor bei der erforderlichen Temperatur eingeleitet. Nach Ende der Umsetzung wird nach üblichen Methoden aufgearbeitet, beispielsweise durch Aufnehmen in einem organischen Verdünnungsmittel wie z.B. Toluol, Extrahieren der organischen Phase mit gesättigter Natriumbicarbonatlösung und Wasser, Trocknen und Filtrieren der organischen Phase und Abdestillieren des Lösungsmittels unter vermindertem Druck. Der Rückstand wird im Hochvakuum "andestilliert", d.h. durch längeres Erhitzen unter

vermindertem Druck auf mäßig erhöhte Temperaturen von den letzten flüchtigen Anteilen befreit, und enthält die Verbindungen der Formel (I), welche durch ihre physikalisch-chemischen Eigenschaften charakterisiert werden.

Die nach diesem Verfahren leicht zugänglichen chlorierten Phosphorylmethylcarbonyl-Derivate sind Gegenstand einer eigenen älteren Patentanmeldung und lassen sich als Pflanzenschutzmittel, insbesondere als Herbizide einsetzen (vgl. deutsche Patentanmeldung P 33 13 070.1 vom 12.4.1983 und die Beispiele).

Beispiel A

Pre-emergence-Test - Gewächshaus

Lösungsmittel: 5 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Samen der Testpflanzen werden in normalen Boden ausgesät und nach 24 Stunden mit der Wirkstoffzubereitung begossen. Dabei hält man die Wassermenge pro Flächeneinheit zweckmäßigerweise konstant. Die Wirkstoffkonzentration in der Zubereitung spielt keine Rolle, entscheidend ist nur die Aufwandmenge des Wirkstoffs pro Flächeneinheit. Nach drei Wochen wird der Schädigungsgrad der Pflanzen bonitiert in % Schädigung im Vergleich zur Entwicklung der unbehandelten Kontrolle. Es bedeuten:

0 % = keine Wirkung (wie unbehandelte Kontrolle)
100 % = totale Vernichtung

In diesem Test zeigt z.B. die folgende Verbindung gemäß den Herstellungsbeispielen eine ausgezeichnete Wirksamkeit : (1).

Tabelle A

pre-emergence-Test/Gewächshaus

| Wirkstoff | Wirkstoff-aufwand kg/ha | Baum-wolle | Soja-bohnen | Sorghum halepense |
|---|---|---|---|---|
| $(i\text{-}H_7C_3O)_2\overset{O}{\overset{\Vert}{P}}\text{-}CCl_2\text{-}\overset{O}{\overset{\Vert}{C}}\text{-}CH_2\text{-}CH(CH_3)_2$ (1) | 0,5 | 0 | 0 | 100 |

Herstellungsbeispiele

Beispiel 1

$$(i\text{-}H_7C_3O)_2\overset{O}{\overset{\|}{P}}\text{-}CCl_2\text{-}\overset{O}{\overset{\|}{C}}\text{-}CH_2\text{-}CH(CH_3)_2$$

In eine Mischung aus 5,3 g (0,02 Mol) O,O-Di-i-propyl-(4-methyl-2-oxo-pentan)-phosphonsäureester, 3,6 g (0,044 Mol) Natriumacetat und 30 ml Wasser wurden bei 10°C 2,9 g (0,04 Mol) Chlor eingeleitet. Nach 30 Minuten wurden 100 ml Toluol zugegeben, dann wurde die organische Phase abgetrennt, mit gesättigter Natriumbicarbonatlösung und Wasser extrahiert und über Natriumsulfat getrocknet; schließlich wurde das Lösungsmittel im Vakuum abgetrennt. Der Rückstand wurde im Hochvakuum andestilliert.

Man erhielt auf diese Weise 5,7 g (86 % der Theorie) O,O-Di-i-propyl-(1,1-dichlor-4-methyl-2-oxo-pentan)-phosphonsäureester als farbloses Öl mit dem Brechungsindex $n_D^{27}$: 1,4490 und einer 98 %igen Reinheit (GC innerer Standard).

Analog Beispiel 1 können auch die folgenden Verbindungen der Formel (I) hergestellt werden:

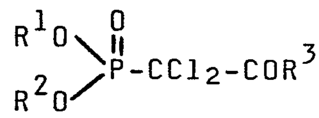

(I)

<u>Tabelle 2</u>

| Beispiel Nr. | $R^1$ | $R^2$ | $R^3$ |
|---|---|---|---|
| 2 | $i-C_3H_7$ | $i-C_3H_7$ | $i-C_3H_7$ |
| 3 | $i-C_4H_9$ | $i-C_4H_9$ | $-CH_2-CH(CH_3)_2$ |
| 4 | $sec.-C_4H_9$ | $sec.-C_4H_9$ | $-CH_2-CH(CH_3)_2$ |

<u>Vorprodukte der Formel (IIa)</u>

<u>Beispiel (IIa-1)</u>

$$(i-H_7C_3O)_2\overset{O}{\overset{\parallel}{P}}-CH_2-CO-CH_2-CH(CH_3)_2$$

Verfahren (a)

Zu 67,8 g (0,159 Mol) einer 15 %igen Lösung von n-Butyllithium in Hexan tropfte man unter Argon bei -60°C erst 120 ml Tetrahydrofuran und dann eine Lösung von 27 g (0,15 Mol) Methanphosphonsäure-diisopropylester in 60 ml Tetrahydrofuran. Das Gemisch wurde 2 Stunden bei -60°C nachgerührt und anschließend bei der gleichen Temperatur portionsweise mit 30,3 g (0,159 Mol) Kupfer-I-jodid versetzt. Man rührte das Reaktionsgemisch 3 1/2 Stunden bei -30°C nach und tropfte dann bei ca. -40°C eine Lösung von 19,2 g (0,159 Mol) Isovaleriansäurechlorid in 100 ml absol. Ether zu. Danach wurde 2 Stunden bei -30°C bis -40°C, anschließend über Nacht ohne Kühlung nachgerührt. Nach Zugabe von 150 ml Wasser und etwas Celite Filtrierhilfe saugte man das Reaktionsgemisch über eine Glasfilternutsche ab, wusch mit 300 ml Chloroform nach und saugte das Filtrat noch einmal über die gleiche Nutsche ab. Die organische Phase wurde abgetrennt und die wäßrige Phase noch einmal mit 150 ml Chloroform extrahiert. Die vereinigten organischen Phasen trocknete man über Natriumsulfat, dampfte das Lösungsmittel im Vakuum ab und destillierte den Rückstand im Vakuum.

Man erhielt so 34,9 g (89 % der Theorie) 2-Oxo-4-methylpentanphosphonsäure-di-isopropylester in Form einer farblosen Flüssigkeit mit dem Siedepunkt Kp: 88°C-93°C/ 0,133 mbar.

Verfahren (b)

Eine Lösung von 4 g (0,03 Mol) 2-i-Butyl-2-chlor-oxiran in 20 ml Methylenchlorid wurde unter Eiskühlung mit 34,9 g (0,21 Mol) Phosphorigsäure-triisopropylester versetzt. Das Gemisch wurde 3 Tage bei 20°C gerührt und dann im Vakuum fraktioniert.

Man erhielt so 3,4 g (43 % der Theorie) 2-Oxo-4-methyl-pentanphosphonsäurediisopropylester mit dem Siedepunkt Kp: 88°C-94°C/0,133 mbar.

Verfahren (c)

Eine Lösung von 36,9 g (0,15 Mol) 4-Methyl-1,2-pentadien-phosphonsäurediisopropylester in 200 ml Ether versetzte man unter leichtem Kühlen bei 10°C bis 15°C mit 13,2 g (0,18 Mol) Diethylamin. Man rührte das Gemisch 18 Stunden bei 20°C nach, gab dann bei 5°C bis 10°C unter gutem Rühren eine Mischung aus 18 g (0,2 Mol) Eisessig und 82 ml Wasser zu und rührte weitere 35 Stunden bei 20°C nach. Die organische Phase wurde abgetrennt, die wäßrige Phase zweimal mit je 100 ml Ether extrahiert. Dann trocknete man die vereinigten Etherphasen über Natriumsulfat, zog das Lösungsmittel ab und destillierte den Rückstand im Vakuum.

Man erhielt auf diese Weise 35,5 g (90 % der Theorie) 4-Methyl-2-oxo-pentanphosphonsäure-diisopropylester mit dem Siedepunkt Kp: 88°C-90°C/0,133 mbar.

Analog zu einem dieser Beispiele wurden z.B. die folgenden Verbindungen der Formel (IIa) hergestellt:

<u>Beispiel (IIa-2)</u>

$$(i\text{-}H_7C_3O)_2\overset{O}{\overset{\|}{P}}\text{-}CH_2\text{-}CO\text{-}CH_2\text{-}C_4H_9\text{-tert.}$$

Kp: 98-102°C/0,133 mbar.

<u>Beispiel (IIa-3)</u>

$$(i\text{-}H_7C_3O)_2\overset{O}{\overset{\|}{P}}\text{-}CH_2\text{-}CO\text{-}CH_2\text{-}$$ 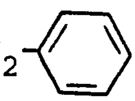

Kp: 118°C/0,133 mbar

<u>Beispiel (IIa-4)</u>

$$(i\text{-}H_9C_4O)_2\overset{O}{\overset{\|}{P}}\text{-}CH_2\text{-}CO\text{-}CH_2\text{-}C_3H_7\text{-i}$$

<u>Beispiel (IIa-5)</u>

$$(sec.\text{-}H_9C_4O)_2\overset{O}{\overset{\|}{P}}\text{-}CH_2\text{-}CO\text{-}CH_2\text{-}C_3H_7\text{-i}$$

Vorprodukt der Formel (V)

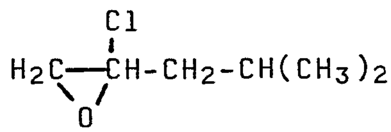

Eine Mischung aus 42 g (0,24 Mol) 3-Chlor-perbenzoesäure und 200 ml Methylenchlorid wurde bei 20°C mit 23,7 g (0,2 Mol) 2-Chlor-4-methyl-1-penten (vgl. J. Am. Chem. Soc. 30, 1146 (1908)) versetzt und 18 Stunden bei 20°C bis 25°C gerührt. Dann kühlte man das Reaktionsgemisch auf 0°C ab, saugte vom Ungelösten ab, wusch mit etwas kaltem Methylenchlorid nach und schüttelte dann das Filtrat einmal mit 100 ml 5 %iger Natriumhydrogensulfit-Lösung, mit 100 ml gesättigter Natriumhydrogencarbonat-Lösung und mit 100 ml Wasser aus. Nach Abdampfen des Lösungsmittels wurde der Rückstand im Vakuum destilliert.

Man erhielt so 17,3 g 2-i-Butyl-2-chlor-oxiran vom Siedepunkt Kp: 38°C-40°C/26,6 mbar (vgl. Chem. Ber. 114, S. 1868 (1981)).

Vorprodukt der Formel (VII)

Beispiel (VII-1)

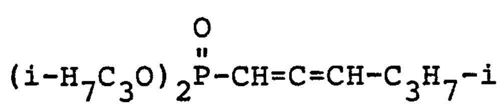

Zu einer Mischung aus 9,8 g (0,1 Mol) 4,4-Dimethyl-1-pentin-3-ol, 11,1 g Triethylamin und 100 ml Methylenchlorid tropfte man bei 0°C bis 10°C 18,5 g (0,1 Mol) Phosphorigsäurediisopropylesterchlorid. Nach Ende der Zugabe entfernte man das Kühlbad; die Temperatur des Reaktionsgemisches stieg allmählich auf ca. 30°C an, wobei sich der zunächst entstandene Phosphorigsäurepropinylester in das Allenphosphonat umlagerte. Man rührte 4 Stunden nach, wusch zweimal mit je 50 ml Wasser und trocknete die organische Phase über Natriumsulfat. Nach Entfernung des Lösungsmittels wurde das Produkt im Vakuum destilliert.

Man erhielt so 17,7 g (72 % der Theorie) 4-Methyl-1,2-pentadienphosphonsäure-diisopropylester mit dem Siedepunkt Kp: 75°C-78°C/0,133 mbar.

Analog zu Beispiel (VII-1) wurden die folgenden Verbindungen der Formel (VII) erhalten:

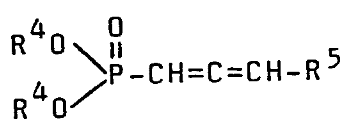

(VII)

<u>Beispiel (VII-2)</u>

$$(i\text{-}H_7C_3O)_2\overset{O}{\overset{\|}{P}}\text{-}CH{=}C{=}CH\text{-}C_4H_9\text{-tert.}$$

Kp: 76°C-78°C/0,133 mbar

Beispiel (VII-3)

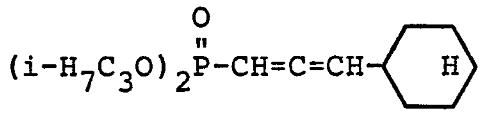

Kp: 111°C-113°C/0,133 mbar

Beispiel (VII-4)

$$(i\text{-}H_9C_4O)_2\overset{O}{\overset{\|}{P}}\text{-}CH{=}C{=}CH\text{-}C_3H_7\text{-}i$$

Beispiel (VII-5)

$$(sec.\text{-}H_9C_4O)_2\overset{O}{\overset{\|}{P}}\text{-}CH{=}C{=}CH\text{-}C_3H_7\text{-}i$$

Patentansprüche

1. Verfahren zur Herstellung von chlorierten Phosphorylmethylcarbonyl-Verbindungen der Formel (I)

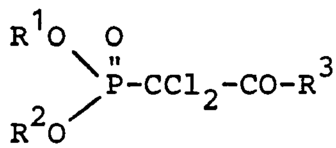

(I)

in welcher

$R^1$ und $R^2$ gleich oder verschieden sind und für Alkyl oder Aryl stehen und

$R^3$ für gegebenenfalls substituierte Reste aus der Reihe Alkyl und Cycloalkyl steht,

dadurch gekennzeichnet, daß man Phosphorylmethylcarbonyl-Verbindungen der Formel (II)

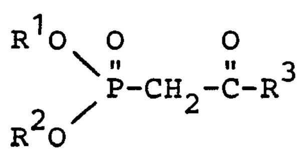

(II)

in welcher

$R^1$,$R^2$ und $R^3$ die oben angegebenen Bedeutungen haben,

in Gegenwart eines Alkalisalzes einer niederen Carbonsäure oder eines Alkalihydrogencarbonats als Säureakzeptor und in Gegenwart von Wasser als Verdünnungsmittel bei Temperaturen zwischen 0°C und 35°C durch Umsetzung mit elementarem Chlor chloriert.

2. Verfahren nach Anspruch 1, dadurch gekennzeichnet, daß man auf 1 Mol einer Phosphorylmethylcarbonyl-Verbindung der Formel (II) 2 Mol Chlor und 2 bis 3 Mol eines Säureakzeptors einsetzt.

3. Phosphorylmethylcarbonyl-Verbindungen der Formel (IIa)

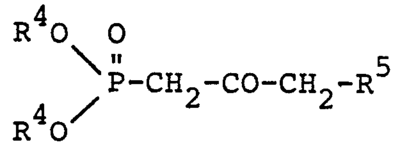

(IIa)

in welcher

$R^4$ für i-Propyl, i-Butyl oder sec.-Butyl steht und

$R^5$ für i-Propyl, tert.-Butyl oder Cyclohexyl steht.

4. Allenphosphonsäureester der Formel (VII)

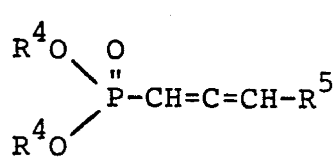

(VII)

in welcher

$R^4$ und $R^5$ die in Anspruch 3 angegebenen Bedeutungen haben.

5. Enamine der Formeln (IXa/IXb)

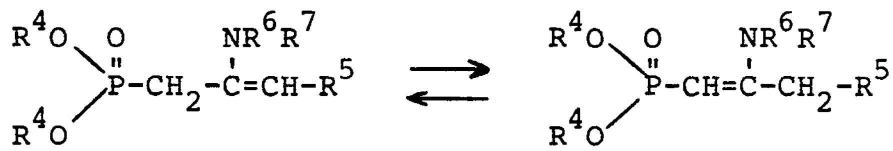

(IXa) (IXb)

in welchen

$R^4$ und $R^5$ die in Anspruch 3 genannten Bedeutungen haben und

$R^6$ und $R^7$ gleich oder verschieden sind und für $C_1$-$C_4$-Alkyl stehen.

Europäisches Patentamt

# EUROPÄISCHER RECHERCHENBERICHT

0168709
Nummer der Anmeldung

EP 85 10 8140

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 001 018 (E.I. DU PONT DE NEMOURS AND CO.)<br>* Seiten 10,11; Seiten 14,15; Beispiel 2; Anspruch 22 *<br>--- | 1,2 | C 07 F 9/40 |
| D,X | TETRAHEDRON LETTERS, Band 22, Nr. 51, 1981, Seiten 5175-5178, Pergamon Press Ltd., GB; H.-J. ALTENBACH et al.: "Phosphor- und schwefelsubstituierte Allene in der Synthese I: Einfache Synthese von beta-Ketophosphonaten aus 1-Alkin-3-Olen"<br>* Insgesamt *<br>--- | 3-5 | |
| D,X | TETRAHEDRON, Band 34, 1978, Seiten 649-654, Pergamon Press, GB; F. MATHEY et al.: "Les alpha-cuprophosphonates-III, application à la synthèse de bêta-cétophosphonates"<br>* Insgesamt *<br>----- | 3 | RECHERCHIERTE SACHGEBIETE (Int. Cl.4)<br>C 07 F 9/00 |

Der vorliegende Recherchenbericht wurde für alle Patentansprüche erstellt.

| Recherchenort | Abschlußdatum der Recherche | Prüfer |
|---|---|---|
| DEN HAAG | 10-10-1985 | BESLIER L.M. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82